# EUROPÄISCHE PATENTSCHRIFT

(11) **EP 2 356 411 B1**
(45) Veröffentlichungstag und Bekanntmachung des Hinweises auf die Patenterteilung: **27.05.2015**
(21) Anmeldenummer: 09753026.5
(22) Anmeldetag: 31.10.2009
(51) Int. Cl.: G01G 21/28, G01G 23/48

(54) **WÄGEZELLE UND VERFAHREN ZUM TEMPERIEREN EINER WÄGEZELLE**
WEIGHING CELL AND METHOD FOR TEMPERATURE CONTROL OF A WEIGHING CELL
CELLULE DE PESAGE ET PROCÉDÉ POUR RÉGULER LA TEMPÉRATURE D'UNE CELLULE DE PESAGE

(30) Priorität: 08.11.2008 DE 102008056514
(43) Veröffentlichungstag der Anmeldung: 17.08.2011
(73) Patentinhaber: Sartorius Lab Instruments GmbH & Co. KG, 37075 Göttingen (DE)
(72) Erfinder: HEINE, August, 37434 Bodensee (DE); LAUBSTEIN, Michael, 37077 Göttingen (DE)
(74) Vertreter: Schneider, Peter Christian
(86) Internationale Anmeldenummer: PCT/EP2009/007809
(87) Internationale Veröffentlichungsnummer: WO 2010/051946

(56) Entgegenhaltungen:
- EP-A1- 1 925 922
- CH-A- 407 571

## Beschreibung

### Gebiet der Erfindung

Die Erfindung betrifft eine Wägezelle mit einem in einem Gehäuse angeordneten Wägesystem, einem außerhalb des Gehäuses angeordneten Lastaufnehmer, der über eine Aufnehmerachse mit dem Wägesystem verbunden ist, und mindestens einem ersten Temperatursensor.

Die Erfindung betrifft weiterhin ein Verfahren zum Temperieren einer Wägezelle insbesondere in Verbindung mit einem Reinigungsvorgang, mit einem in einem Gehäuse angeordneten Wägesystem, einem außerhalb des Gehäuses angeordneten Lastaufnehmer, der über eine Aufnehmerachse mit dem Wägesystem verbunden ist, und mit mindestens einem ersten Temperatursensor.

### Stand der Technik

Für Wägezellen in der Pharmaindustrie wird zunehmend eine Reinigbarkeit bzw. Desinfektion oder Sterilisation mit heißen Flüssigkeiten und eine Trocknung mit warmer bis heißer Luft verlangt. Bei Einwirkung von sehr hohen Temperaturen kann es dabei zu Schädigungen der Wägezelle kommen. Auch nach Rückgang der Temperaturen in der Umgebung zu Normaltemperaturen kann es noch zu Abweichungen der wägetechnischen Spezifikationen kommen, wenn keine Gegenmaßnahmen ergriffen werden.

Aus der EP 1 925 922 A1 ist eine Wägezelle mit einem in einem Gehäuse angeordneten Wägesystem bekannt. Außerhalb des Gehäuses ist ein Lastaufnehmer in Form einer Waagschale angeordnet, der über eine das Gehäuse durch einen Durchlass durchdringende Aufnehmerachse mit dem Wägesystem verbunden ist. Das Gehäuse ist auf einer Aufnahmestruktur angeordnet, die temperierbar ist und zu diesem Zweck mit einem Wärmetauscher in Verbindung steht, der das Gehäuse gesteuert von einer mit einem Temperatursensor am Gehäuse in Verbindung stehenden Steuer- und Regeleinrichtung kühlt bzw. temperiert. Auch wird dabei vorgeschlagen, einen fluidgefüllten Wärmetauscher zu verwenden.

Nachteilig dabei ist, dass das Gehäuse bzw. die Wägezelle nur mittelbar als Ganzes über die Aufnahmestruktur temperierbar ist, was zu relativ langen Zeitverzögerungen führt. Der Fachmann zieht aus der EP 1 925 922 A1, wie auch beispielsweise aus der EP 1 396 711 B1, die Lehre, den Gehäuseinnenraum bzw. die Wägezelle frei von Luftströmungen zu halten, um keine Messwertverfälschungen zu erhalten.

Aus der DE 102 00 598 A1 ist eine Vorrichtung zur gravimetrischen Erfassung der Sorptionsisotherme bekannt, innerhalb der ebenfalls eine Analysenwaage als Ganzes durch ein das Gehäuse der Vorrichtung durchströmendes Gas temperiert wird.

Aus der CH 407 571 A ist eine Thermowaage bekannt, die als eine Waage mit einem gasdichten Gehäuse ausgebildet ist, in dem ein Wägesystem angeordnet ist. Ein außerhalb des Wägegehäuses an einer mit dem Wägesystem verbundenen Aufnehmerachse angeordneter Lastaufnehmer ragt in eine Glocke hinein, die mit dem Wagengehäuse gasdicht verbunden ist. Um eine Wägung bei einer von der normalen Zimmertemperatur stark abweichenden Temperatur der Probe vornehmen zu können, wird über den den Lastaufnehmer/Probentiegel umschließenden Teil der Glocke noch eine Kühl- oder Heizvorrichtung gestülpt. Dem Wagengehäuse lässt sich über einen Gaseinlass ein inertes Gas zuführen, um einen Überdruck zu erzeugen, der einen Eintritt in den Gehäuseinnenraum von aggressiven Gasen aus dem Hohlraum der Glocke verhindern soll. Während im Gehäuseinnenraum des Wagengehäuses keine Temperierung vorgesehen ist, ist im Hohlraum der Glocke eine mittelbare Temperierung über eine Kühl- oder Heizvorrichtung vorgesehen. Eine Temperierung über den im Hohlraum der Glocke fließenden Gasstrom ist nicht vorgesehen.

### Aufgabenstellung

Aufgabe der vorliegenden Erfindung ist es daher, eine Wägezelle und ein Verfahren zum Temperieren einer Wägezelle anzugeben, deren Gehäuseinnenraum bzw. Wägesystem direkter und somit reaktionsschneller gekühlt bzw. temperiert wird.

### Darlegung der Erfindung

Diese Aufgabe wird bezüglich der Wägezelle in Verbindung mit dem Oberbegriff des Anspruches 1 dadurch gelöst, dass ein in das Gehäuse hineinführender Lufteinlass und ein aus dem Gehäuse herausführender Luftauslass vorgesehen sind, über die temporär ein temperierendes Gas in das Gehäuse hinein- und herausführbar ist, und dass der erste Temperatursensor zur Überwachung der Ablufttemperatur dem Luftauslass im Gehäuse benachbart angeordnet ist.

Überraschenderweise hat sich gezeigt, dass das Durchleiten von temperierendem und insbesondere von gekühltem Gas durch das Gehäuse der Wägezelle bzw. des Wägesystems bereits nach kurzer Zeit nach dem Abschalten des Gasstromes keinen nachteiligen Einfluss auf die Messergebnisse zeigt. Ein neuer Messvorgang kann nach erfolgter Reinigung schneller erfolgen. Zur Überwachung der Wägesystemtemperatur ist mit thermischem Kontakt am Wägesystem ein zweiter Sensor angeordnet.

Es ist sogar möglich, während des Messvorganges temperierendes Gas durch das Gehäuse zu leiten. Notwendig ist dabei allerdings eine gleichmäßige Regelung eines schwachen Gasstromes, ein entstehender Offset des Wägewertes kann durch Korrekturwerte gegebenenfalls berücksichtigt werden. Dadurch kann insbesondere bei einem gewissen Überdruck zuverlässig das Eindringen von Partikeln in das Gehäuse verhindert werden.

Der Fachmann war bisher bestrebt, auch die Wägezellen, die insbesondere zur Verwendung in automatisierten Anlagen vorgesehen sind, in ihrem Wägesystem frei von Luftströmungen zuhalten. Der Fachmann war dieser Vorstellung so verhaftet, dass er lediglich versucht hat, die Wägezellen mittelbar über Kühlkörper von außen zu kühlen.

Gemäß einer bevorzugten Ausführungsform der Erfindung ist das Gas temperierbare Luft.

Gemäß einer weiteren bevorzugten Ausführungsform der Erfindung weist die Temperiervorrichtung eine Regel- und Steuereinheit und Mittel zum Temperieren des Gases auf.

Durch die Regel- und Steuereinheit kann in Abhängigkeit von den Signalen des oder der Temperatursensoren die Kühlung bzw. Temperierung geregelt werden. Hierzu weist die Temperiervorrichtung Mittel zum Temperieren des Gases auf. Als Mittel zum Temperieren ist beispielsweise ein Wärmetauscher vorgesehen. Als Mittel zum Temperieren kann aber auch ein Peltier-Element vorgesehen sei.

Nach einer weiteren bevorzugten Ausführungsform der Erfindung ist im Lufteinlass und/oder im Luftauslass ein regelbares Ventil vorgesehen. Dadurch sind über die Regel- und Steuereinheit der Druck und/oder der Volumenstrom des Gases im Gehäuse regelbar. Zur Regelung des Druckes kann im Gehäuse zusätzlich ein Drucksensor angeordnet sein.

Gemäß einer weiteren bevorzugten Ausführungsform der Erfindung erfolgt der Austritt von Gas aus dem Gehäuse zumindest teilweise über den Durchlass des Gehäuses für die Aufnehmerachse des Lastaufnehmers.

Dadurch kann insbesondere verhindert werden, dass über den Durchlass Reinigungsflüssigkeit oder Schmutz in das Gehäuse eindringt.

Die Aufgabe bezüglich des Verfahrens wird in Verbindung mit dem Oberbegriff des Anspruches 11 dadurch gelöst, dass in das Gehäuse in Abhängigkeit von der an dem ersten Temperatursensor gemessenen Temperatur temporär ein temperierendes Gas über einen Lufteinlass hineingeführt und über einen Luftauslass aus dem Gehäuse herausgeführt wird.

Ein neuer Messvorgang kann nach erfolgter Reinigung dadurch schneller erfolgen.

Es ist sogar möglich, während des Messvorganges ein temperierendes Gas durch das Gehäuse zu leiten. Zweckmäßig ist dabei allerdings eine gleichmäßige Regelung eines schwachen Gasstromes durch eine Regel- und Steuereinheit, bei der Korrekturwerte gegebenenfalls berücksichtigt werden können.

Durch das Gehäuse wird in Abhängigkeit von der an dem ersten, einem Luftabfluss zugeordneten Temperatursensor gemessenen Temperatur und gegebenenfalls einer zweiten, dem Wägesystem zugeordneten Temperatursensor, gemessenen Temperatur das temperierende Gas, geleitet.

Dabei kann der Volumenstrom des Gases von der Steuer- und Regeleinrichtung geregelt werden. Ebenfalls kann der Druck des Gases von der Steuer- und Regeleinrichtung geregelt werden. Die Steuer- und Regeleinrichtung kann dabei Teil einer Temperiervorrichtung sein.

Nach einer bevorzugten Ausführungsform der Erfindung wird aus dem Signal des zweiten Temperatursensors die Entscheidung zum Beenden der Temperierung der Wägezelle abgeleitet.

Die Entscheidung zum Beenden der Temperierung kann aber auch aus den Signalen der Temperatursensoren abgeleitet werden.

Gemäß einer weiteren bevorzugten Ausführungsform der Erfindung wird das verwendete Gas temperiert und/oder gefiltert und/oder mit einer vorgegebenen Feuchtigkeit vorgehalten.

Nach einer weiteren bevorzugten Ausführungsform der Erfindung wird in der Wägezelle auch während der Wägung ein vorgegebener Überdruck geregelt.

Gemäß einer bevorzugten Ausführungsform der Erfindung wird das Gas aus dem Gehäuse zumindest teilweise über den Durchlass des Gehäuses für die Aufnehmerachse des Lastaufnehmers abgeleitet.

Dadurch lässt sich einfach und zuverlässig, gegebenenfalls in Verbindung mit einer an sich bekannten Abdichtung des Durchlasses während eines Reinigungs- und Spülvorganges, verhindern, dass beim Reinigen bzw. Spülen der Wägezelle zwischen Lastaufnehmer und Gehäuseoberfläche Reinigungs- oder Spülflüssigkeit in die Wägezelle bzw. ihr Gehäuse eindringen kann.

Das Gas kann beispielsweise als Druckluft aus einer externen Druckluftleitung oder als angesaugte Raumluft einer Druckversorgungseinrichtung dem Gehäuse zugeführt werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

In den Zeichnungen zeigen:

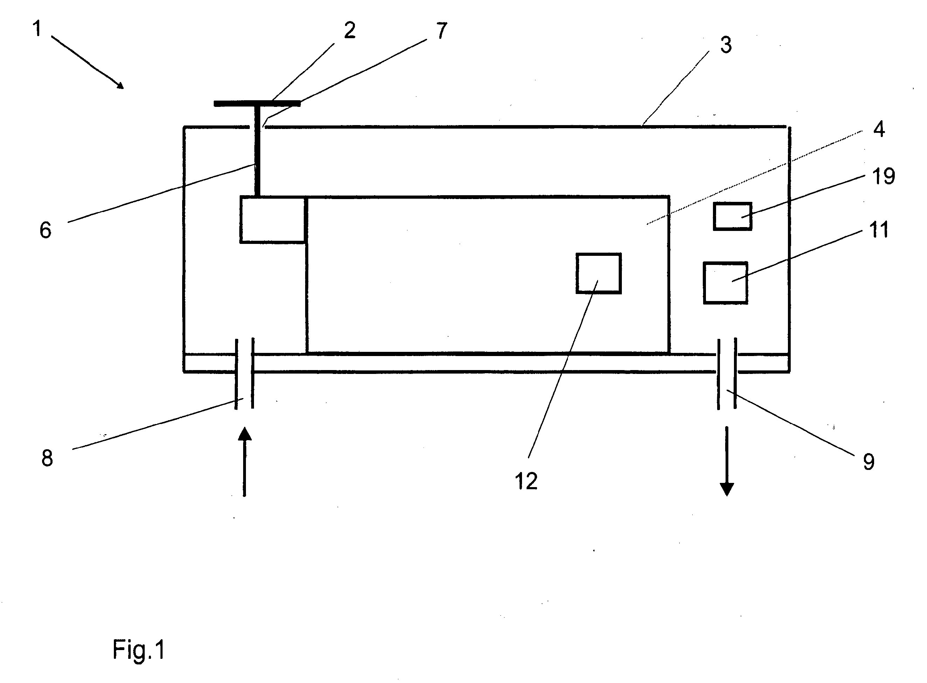

- Figur 1:: eine schematische Seitenansicht einer Wägezelle und

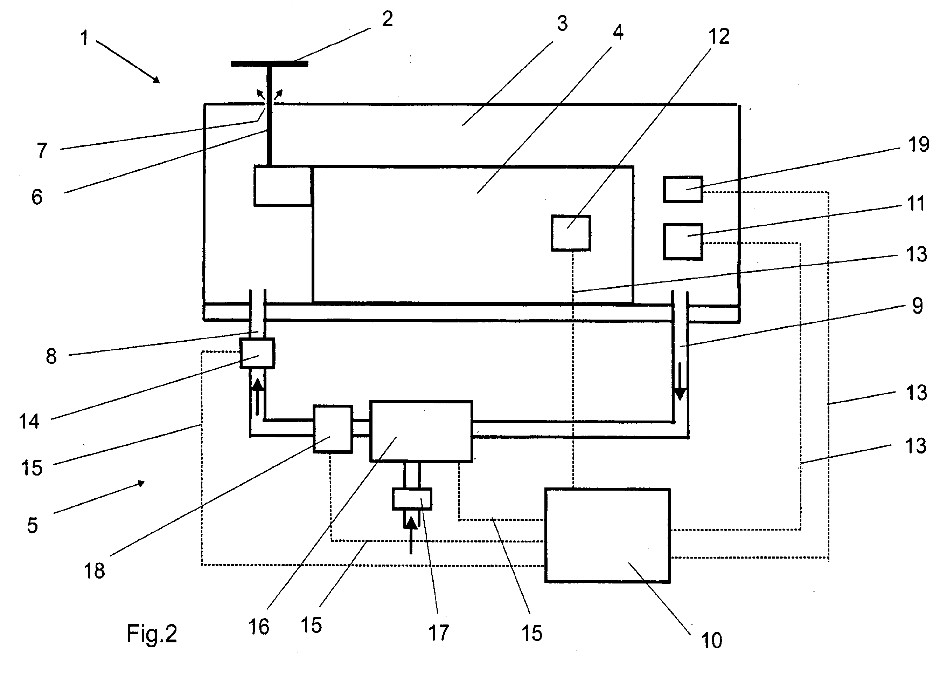

- Figur 2:: eine schematische Seitenansicht einer Wägezelle mit Temperiervorrichtung.

### Beschreibung bevorzugter Ausführungsformen

Eine Wägezelle 1 besteht im Wesentlichen aus einem Lastaufnehmer 2, einem Gehäuse 3, einem Wägesystem 4 und einer Temperiervorrichtung 5.

Der außerhalb des Gehäuses 3 angeordnete Lastaufnehmer 2 ist über eine Aufnehmerachse 6 mit dem in dem Gehäuse 3 angeordneten Wägesystem 4 verbunden. Das Gehäuse 3 weist einen Durchlass 7 auf, durch den die Aufnehmerachse 6 das Gehäuse 3 durchdringt und der gegebenenfalls durch eine hier nicht dargestellte Abdichtung für einen Reinigungsprozess abdichtbar ist.

Das Gehäuse 3 weist in einem ersten Endbereich einen Lufteinlass 8 und in einem zweiten Endbereich einen Luftauslass 9 auf. Über den Lufteinlass 8 ist ein temperierbares Gas, im Ausführungsbeispiel Luft, von der Temperiervorrichtung 5 in das Gehäuse 3 hinein- und über den Luftauslass 9 herausführbar.

Die Temperiervorrichtung 5 weist eine mit ihr verbundene Regel- und Steuereinheit 10 auf. Ein erster Temperatursensor 11 ist dem Luftauslass 9 im Gehäuse 3 benachbart angeordnet. Ein zweiter Temperatursensor 12 ist mit thermischem Kontakt am Wägesystem 4 angeordnet. Über Signalleitungen 13 sind die Temperatursensoren 11, 12 mit der Regel- und Steuereinheit 10 verbunden. Dem Lufteinlass 8 ist ein regelbares Ventil 14 vorgelagert, das über eine Steuerleitung 15 mit der Regel- und Steuereinheit 10 verbunden ist.

Die Temperiervorrichtung 5 weist weiterhin ein Mittel 16 zum Temperieren auf, das beispielsweise als Wärmetauscher oder als Peltier-Element ausgebildet sein kann. Die Temperiervorrichtung weist zudem einen Filter 17 auf, über den angesaugte Luft gefiltert wird. Dem regelbaren Ventil 14 ist ein Ventilator bzw. eine Druckversorgungseinrichtung 18 vorgelagert, über den bzw. die die Luft angesaugt und gefördert werden kann. Die Druckversorgungseinrichtung 18 ist ebenfalls über eine Steuerleitung 15 mit der Regel- und Steuereinheit 10 verbunden. Weiterhin ist im Gehäuse 3 ein Drucksensor 19 angeordnet, der über eine weitere Signalleitung 13 mit der Regel- und Steuereinheit 10 verbunden ist.

Durch das Gehäuse 3 wird in Abhängigkeit von dem Signal des ersten Temperatursensors 11 und des zweiten Temperatursensors 12 ein temperiertes, das heißt meist gekühltes, Gas geleitet. Das Temperieren wird durch die Regel- und Steuereinheit 10 gesteuert. Das Gas kann aus dem Gehäuse 3 zumindest teilweise über den Durchlass 7, bzw. dem Zwischenraum zwischen Aufnehmerachse 6 und dem Durchlass 7, abgeführt werden.

### Bezugszeichenliste

- 1: Wägezelle
- 2: Lastaufnehmer
- 3: Gehäuse
- 4: Wägesystem
- 5: Temperiervorrichtung
- 6: Aufnehmerachse
- 7: Durchlass
- 8: Lufteinlass
- 9: Luftauslass
- 10: Regel- und Steuereinheit
- 11: Erster Temperatursensor
- 12: Zweiter Temperatursensor
- 13: Signalleitung
- 14: Regelbares Ventil
- 15: Steuerleitung
- 16: Mittel zum Temperieren
- 17: Filter
- 18: Druckversorgungseinrichtung
- 19: Drucksensor

## Patentansprüche

1. Wägezelle (1) mit einem in einem Gehäuse (3) angeordneten Wägesystem (4), einem außerhalb des Gehäuses (3) angeordneten Lastaufnehmer (2), der über eine Aufnehmerachse (6) mit dem Wägesystem (4) verbunden ist, mindestens einem ersten Temperatursensor (11),
**dadurch gekennzeichnet,**
**dass** ein in das Gehäuse (3) hineinführender Lufteinlass (8) und ein aus dem Gehäuse (3) herausführender Luftauslass (9) vorgesehen sind, über die temporär ein temperierendes Gas in das Gehäuse (3) hinein- und herausführbar ist, und
**dass** der erste Temperatursensor (11) zur Überwachung der Ablufttemperatur dem Luftauslass (9) im Gehäuse (3) benachbart angeordnet ist.

2. Wägezelle nach Anspruch 1,
**dadurch gekennzeichnet,**
**dass** das Gas temperiert ist und vorzugsweise Luft ist.

3. Wägezelle nach Anspruch 1 oder 2,
**dadurch gekennzeichnet,**
**dass** ein zweiter Sensor (12) zur Überwachung der Wägesystemtemperatur (4) mit thermischem Kontakt am Wägesystem angeordnet ist.

4. Wägezelle nach einem der Ansprüche 1 bis 3,
**dadurch gekennzeichnet,**
**dass** eine Temperiervorrichtung (5), eine Regel- und Steuereinheit (10) und Mittel zum Temperieren (16) des Gases vorgesehen sind.

5. Wägezelle nach Anspruch 4,
**dadurch gekennzeichnet,**
**dass** als Mittel zum Temperieren (16) ein Wärmetauscher vorgesehen ist.

6. Wägezelle nach Anspruch 4,
**dadurch gekennzeichnet,**
**dass** als Mittel zum Temperieren (16) ein Peltier-Element vorgesehen ist.

7. Wägezelle nach einem der Ansprüche 1 bis 6,
**dadurch gekennzeichnet,**
**dass** im Lufteinlass (8) und/oder im Luftauslass (9) ein regelbares Ventil (14) vorgesehen ist.

8. Wägezelle nach einem der Ansprüche 1 bis 7,
**dadurch gekennzeichnet,**
**dass** der Druck und/oder der Volumenstrom des Gases im Gehäuse (3) regelbar sind.

9. Wägezelle nach einem der Ansprüche 1 bis 8,
**dadurch gekennzeichnet,**
**dass** der Austritt von Gas aus dem Gehäuse (3) zumindest teilweise über den Durchlass (7) des Gehäuses (3) für die Aufnehmerachse (6) des Lastaufnehmers (2) erfolgen kann.

10. Verfahren zum Temperieren einer Wägezelle insbesondere in Verbindung mit einem Reinigungsvorgang, mit einem in einem Gehäuse (3) angeordneten Wägesystem (4), einem außerhalb des Gehäuses (3) angeordneten Lastaufnehmer (2), der über eine Aufnehmerachse (6) mit dem Wägesystem (4) verbunden ist, und mindestens einem ersten Temperatursensor (11),
**dadurch gekennzeichnet,**
**dass** in das Gehäuse (3) in Abhängigkeit von der an dem ersten Temperatursensor (11, 12) gemessenen Temperatur temporär ein temperierendes Gas über einen Lufteinlass (8) hineingeführt und über einen Luftauslass (9) aus dem Gehäuse (3) herausgeführt wird.

11. Verfahren nach Anspruch 10,
**dadurch gekennzeichnet,**
**dass** durch das Gehäuse (3) in Abhängigkeit von der an dem ersten, einem Luftauslass zugeordneten Temperatursensor (11) und einem zweiten, dem Wägesystem (4) zugeordneten Temperatursensor (12), gemessenen Temperatur das Gas geleitet wird.

12. Verfahren nach Anspruch 10 oder 11,
**dadurch gekennzeichnet,**
**dass** der Volumenstrom des Gases von einer Steuer- und Regeleinrichtung (10) geregelt wird.

13. Verfahren nach Anspruch 10 oder 11,
**dadurch gekennzeichnet,**
**dass** der Druck des Gases von einer Steuer- und Regeleinrichtung (10) geregelt wird.

14. Verfahren nach einem der Ansprüche 11 bis 13,
**dadurch gekennzeichnet,**
**dass** aus dem Signal des zweiten Temperatursensors (12) die Entscheidung zum Beenden der Temperierung abgeleitet wird.

15. Verfahren nach einem der Ansprüche 11 bis 14,
**dadurch gekennzeichnet,**
**dass** aus den Signalen der Temperatursensoren (11, 12) die Entscheidung zum Beenden der Temperierung abgeleitet wird.

16. Verfahren nach einem der Ansprüche 10 bis 15,
**dadurch gekennzeichnet,**
**dass** das verwendete Gas temperiert und/oder gefiltert und/oder mit einer vorgegebenen Feuchtigkeit vorgehalten wird.

17. Verfahren nach einem der Ansprüche 10 bis 16,
**dadurch gekennzeichnet,**
**dass** Gas aus dem Gehäuse (3) zumindest teilweise über den Durchlass (7) des Gehäuses (3) für die Aufnehmerachse (6) des Lastaufnehmers (2) abgeleitet wird.

## Claims

1. Weighing cell (1) with a weighing system (4) arranged in a housing (3), a load pick-up (2), which is arranged outside the housing (3) and which is connected with the weighing system (4) by way of a pick-up axle (6), and at least one first temperature sensor (11), **characterised in that** an air inlet (8) leading into the housing (3) and an air outlet (9) leading out of the housing (3) are provided, by way of which a temperature-controlling gas can be conducted temporarily into the housing (3) and conducted out of the housing, and that the first temperature sensor (11) is, for monitoring the exhaust air temperature, arranged adjacent to the air outlet (9) in the housing (3).

2. Weighing cell according to claim 1, **characterised in that** the gas is temperature-controlled and is preferably air.

3. Weighing cell according to claim 1 or 2, **characterised in that** a second sensor (12) for monitoring the weighing system temperature (4) is arranged with thermal contact at the weighing system.

4. Weighing cell according to any one of claims 1 to 3, **characterised in that** a temperature-controlling device (5), a regulating and controlling unit (10) and means for temperature control (16) of the gas are provided.

5. Weighing cell according to claim 4, **characterised in that** a heat exchanger is provided as means for temperature control (16).

6. Weighing cell according to claim 4, **characterised in that** a Peltier element is provided as means for temperature control (16).

7. Weighing cell according to any one of claims 1 to 6, **characterised in that** a regulable valve (14) is provided in the air inlet (8) and/or in the air outlet (9).

8. Weighing cell according to any one of claims 1 to 7, **characterised in that** the pressure and/or volume flow of the gas in the housing (3) is or are regulable.

9. Weighing cell according to any one of claims 1 to 8, **characterised in that** the issue of gas from the housing (3) can take place at least partly by way of the passage (7) of the housing (3) for the pick-up axle (6) of the load pick-up (2).

10. Method for temperature control of a weighing cell particularly in connection with a cleaning process, with a weighing system (4) arranged in a housing (3), a load pick-up (2), which is arranged outside the housing (3) and which is connected with the weighing system (4) by way of a pick-up axle (6), and at least one first temperature sensor (11), **characterised in that** a temperature-controlling gas is temporarily conducted into the housing (3) by way of an air inlet (8) in dependence on the temperature measured at the first temperature sensor (11, 12) and is conducted out of the housing (3) by way of an air outlet (9).

11. Method according to claim 10, **characterised in that** the gas is conducted through the housing (3) in dependence on the temperature measured at the first temperature sensor (11) associated with the air outlet and the temperature measured at a second temperature sensor (12) associated with the weighing system (4).

12. Method according to claim 10 or 11, **characterised in that** the volume flow of the gas is regulated by a controlling and regulating device (10).

13. Method according to claim 10 or 11, **characterised in that** the pressure of the gas is regulated by a controlling and regulating device (10).

14. Method according to any one of claims 11 to 13, **characterised in that** the decision for ending the temperature control is derived from the signal of the second temperature sensor (12).

15. Method according to any one of claims 11 to 14, **characterised in that** the decision for ending the temperature control is derived from the signals of the temperature sensors (11, 12).

16. Method according to any one of claims 10 to 15, **characterised in that** the gas used is subjected to temperature control and/or filtered and/or kept with a predetermined moisture content.

17. Method according to any one of claims 10 to 16, **characterised in that** gas is conducted out of the housing (3) at least partly via the passage (7) of the housing (3) for the pick-up axle (6) of the load pick-up (2).

## Revendications

1. Cellule de pesage (1) comprenant un système de pesage (4) agencé dans un boîtier (3), un support de charge (2) disposé à l'extérieur du boîtier (3), qui est relié avec le système de pesage (4) par un axe de support (6), au moins un premier capteur de température (11),
**caractérisée en ce**
**qu'**une entrée d'air (8) menant vers l'intérieur du boitier (3) et une sortie d'air (9) sortant du boitier (3) sont prévues, par lesquelles un gaz porté temporairement à une température constante peut être mené vers l'intérieur et vers l'extérieur du boitier (3), et
**que** le premier capteur de température (11) est disposé au voisinage de la sortie d'air (9) dans le boitier (3) pour le contrôle de la température de l'air évacué.

2. Cellule de pesage selon la revendication 1,
**caractérisée en ce**
**que** le gaz est porté à une température constante et est de préférence de l'air.

3. Cellule de pesage selon les revendications 1 ou 2,
**caractérisée en ce**
**qu'**un deuxième capteur (12) avec un contact thermique au niveau du système de pesage est aménagé pour le contrôle de la température du système de pesage (4).

4. Cellule de pesage selon l'une des revendications 1 à 3,
**caractérisée en ce**
**qu'**un dispositif de réglage à une température constante (5), une unité de réglage et de commande (10) et des moyens (16) pour porter le gaz à une température constante sont prévus.

5. Cellule de pesage selon la revendication 4,
**caractérisée en ce**
**qu'**un échangeur de chaleur est prévu en tant que moyen (16) pour le réglage à une température constante.

6. Cellule de pesage selon la revendication 4,
**caractérisée en ce**
**qu'**un élément Peltier est prévu en tant que moyen (16) de réglage à une température constante.

7. Cellule de pesage selon l'une des revendications 1 à 6,
**caractérisée en ce**
**qu'**une soupape (14) réglable est prévue dans l'entrée d'air (8) et/ou dans la sortie d'air (9).

8. Cellule de pesage selon l'une des revendications 1 à 7,
**caractérisée en ce**
**que** la pression, et/ou le flux volumique, du gaz dans le boitier (3) peuvent être régulés.

9. Cellule de pesage selon l'une des revendications 1 à 8,
**caractérisée en ce**
**que** la sortie de gaz du boitier (3) peut s'effectuer au moins partiellement par le passage (7) du boitier (3) pour l'axe de support (6) du support de charge (2).

10. Procédé pour le réglage d'une cellule de pesage à une température constante, en particulier en liaison avec un processus de nettoyage, comprenant un système de pesage (4) agencé dans un boitier (3), un support de charge (2) disposé à l'extérieur du boitier (3), qui est relié avec le système de pesage (4) par l'intermédiaire d'un axe de support (6), et au moins un premier capteur de température (11),
**caractérisé en ce**
**qu'**un gaz porté à une température constante est introduit temporairement dans le boitier (3) en fonction de la température mesurée par le premier capteur de température (11, 12) par l'intermédiaire d'une entrée d'air (8) et est évacué du boitier (3) par une sortie d'air (9).

11. Procédé selon la revendication 10,
**caractérisé en ce**
**que** le gaz est introduit pour traverser le boitier (3) en fonction de la température mesurée par le premier capteur de température (11), associé à une sortie d'air, et par un second capteur de température (12), associé au système de pesage (4).

12. Procédé selon les revendications 10 ou 11,
**caractérisé en ce**
**que** le flux volumique du gaz est régulé par une unité de commande et de réglage (10).

13. Procédé selon les revendications 10 ou 11,
**caractérisé en ce**
**que** la pression du gaz est régulée par une unité de commande et de réglage (10).

14. Procédé selon l'une des revendications 11 à 13,
**caractérisé en ce**
**que** le choix pour l'arrêt du réglage à une température constante est une conséquence du signal du deuxième capteur de température (12).

15. Procédé selon l'une des revendications 11 à 14,
**caractérisé en ce**
**que** le choix pour l'arrêt du réglage à une température constante est une conséquence des signaux des capteurs de température (11, 12).

16. Procédé selon l'une des revendications 10 à 15,
**caractérisé en ce**
**que** le gaz employé est maintenu à une température constante, et/ou filtré, et/ou maintenu avec une humidité prédéfinie.

17. Procédé selon l'une des revendications 10 à 16,
**caractérisé en ce**
**que** le gaz est évacué du boitier (3), au moins partiellement, par l'intermédiaire du passage (7) du boitier (3) pour l'axe de support (6) du support de charge (2).
